# EUROPÄISCHE PATENTSCHRIFT

(11) **EP 0 843 256 B1**
(45) Veröffentlichungstag und Bekanntmachung des Hinweises auf die Patenterteilung: **18.06.2008**
(21) Anmeldenummer: 97117565.8
(22) Anmeldetag: 10.10.1997
(51) Int. Cl.: G06F 9/45, G06F 9/455

(54) **Nachbildung eines Bedingungscodes bei Codetransformationen**
Emulation of condition codes with code transformations
Emulation des codes de condition dans des transformations de code

(30) Priorität: 18.11.1996 DE 19647628
(43) Veröffentlichungstag der Anmeldung: 20.05.1998
(73) Patentinhaber: Fujitsu Siemens Computers GmbH, 80807 München (DE)
(72) Erfinder: Loderer, Johann, 85250 Altomünster (DE)
(74) Vertreter: Epping - Hermann - Fischer

(56) Entgegenhaltungen:
- WO-A-92/15939
- SITES R L ET AL: "BINARY TRANSLATION" COMMUNICATIONS OF THE ASSOCIATION FOR COMPUTING MACHINERY, ACM, NEW YORK, NY, US, Bd. 36, Nr. 2, 1. Februar 1993 (1993-02-01), Seiten 69-81, XP000358267 ISSN: 0001-0782
- COGSWELL B H ET AL: "PERFORMANCE IMPACT OF ARCHITECTURAL FEATURES DURING BINARY TO BINARY TRANSLATION" CONFERENCE ON PARALLEL ARCHITECTURES AND COMPILATION TECHNIQUES, 1995, Seiten 302-305, XP001131086

## Beschreibung

Die Erfindung betrifft ein Verfahren zur Nachbildung eines Bedingungscodes bei der Portierung von hardwarespezifischem Programmcode von einer Ursprungshardware auf eine Zielhardware, bei der keine Hardware-Unterstützung eines Bedingungscodes vorgesehen ist.

Insbesondere auf Großrechnersystemen (z.B. VAX- oder IBM/390-Mainframes) ist in der Rechnerarchitektur oft ein spezielles, als *Bedingungscode* oder *Condition-Code* bezeichnetes, in der Regel mehrere Bits umfassendes Hardware-Flag implementiert. Es stellt eine Hardware-Anzeige dar, die u.a. bei Vergleichsoperationen zum Tragen kommt und durch entsprechende Maschinenbefehle auf einen in Abhängigkeit vom Ergebnis der Operation spezifizierten Wert gesetzt wird. Auch arithmetische Überläufe (overflow) können so angezeigt werden. Darauffolgende Befehle, insbesondere Anweisungen für bedingte Verzweigungen, können dann den Bedingungscode auswerten, um z.B. ein Sprungziel festzulegen.

Neue Rechnergenerationen, insbesondere solche mit RISC-Architektur, weisen in der Regel keinen Bedingungscode auf. Folglich muß bei einer Transformation von hardwarespezifischem Programmcode von einer Ursprungshardware mit Bedingungscode in Programmcode für eine solche Zielhardware ohne Bedingungscode eine Nachbildung des Bedingungscodes auf Softwareebene erfolgen.

Ein Verfahren zur Nachbildung von Bedingungscode ist beispielsweise in dem Artikel "Binary Translations", R. L. Sites et al., Communications of the ACM, Vol. 36, No. 2 Febuary 1993, beschrieben. Register der Ursprungshardware werden bei einer Portierung von binärem Programmcode auf Register der Zielhardware abgebildet, wobei überzählige Register der Zielhardware eingesetzt werden, um die Bits des Bedingungscodes auf der Zielhardware abzubilden. Eine Berechnung des Bedingungscodes erfolgt nur, wenn dieser auch tatsächlich benötigt wird.

Insbesondere wenn der Wertevorrat des Bedingungscodes mehr als zwei verschiedene Werte umfaßt, müssen dabei auf der Zielhardware bei der Nachbildung einer Anweisung auch mehrere Einzelabfragen bzw. -vergleiche durchgeführt werden, um den Wert des Bedingungscodes nach einer bei der Transformation aus einer den Bedingungscode beeinflussenden Anweisung hervorgegangenen Befehlssequenz zu ermitteln. Dazu müssen zur Gewinnung des Bedingungscodes die Ergebnisse der Einzelabfragen bzw. -vergleiche miteinander verknüpft werden. Eine naheliegende und gewöhnlich benutzte Methode besteht darin, aus den Einzelabfragen bzw. -vergleichen eine "if"-Kaskade, d.h. eine mehrstufige Verzweigung aufzubauen. Die Umsetzung einer solchen Verzweigung in Maschinencode erfolgt mit Hilfe von Sprungbefehlen. Bei einer derartigen Lösung führen jedoch die bei vielen Rechnern relativ zu anderen Maschinenbefehlen "zeitintensiven", d.h. eine hohe Anzahl von Prozessor-Taktzyklen benötigenden Sprungbefehle zu Geschwindigkeitseinbußen.

Aufgabe der Erfindung ist es daher ein Verfahren zur Nachbildung eines Bedingungscodes bei der Portierung von hardwarespezifischem Programmcode von einer Ursprungshardware auf eine keinen Bedingungscode vorsehende Zielhardware anzugeben, bei dem die oben genannten Nachteile vermieden werden.

Die Aufgabe wird gelöst durch ein Verfahren zur Nachbildung eines Bedingungscodes, das die im Patentanspruch 1 angegebenen Merkmale aufweist.

Die Nachbildung des Bedingungscodes auf der Zielhardware erfolgt erfindungsgemäß wie folgt:
Zunächst wird eine Abbildung definiert, die jedem möglichen Wert des Bedingungscodes auf der Ursprungshardware eindeutig ein Bitmuster auf der Zielhardware zugeordnet. Zur Abspeicherung des dem jeweils aktuellen Wert des Bedingungscodes zugeordneten Bitmusters wird auf der Zielhardware ein Speicherbereich oder ein eigenes Register vorgesehen.
Bei der Portierung des Programmcodes der Ursprungshardware wird jede potentiell den Wert des Bedingungscodes beeinflussende Anweisung transformiert, indem sie mit Hilfe eines beim Programmablauf einen Ergebniswert generierenden Vergleichsbefehls im Programmcode für die Zielhardware nachgebildet wird.
Der Befehl bewerkstelligt dabei sowohl die Feststellung des Ergebniswerts in Abhängigkeit vom Programmlauf als auch das Setzen und Ausgeben dieses Ergebniswertes, z.B. in einem Register. Diese Zusammenfassung zweier Teilfunktionen in einem einzigen Maschinenbefehl ist entscheidend für die Vermeidung von Verzweigungen im Programmfluß. Zur Nachbildung einer Anweisung kann es auch erforderlich sein, mehrere - auch verschiedene - solcher jeweils einen Ergebniswert generierender Befehle zu verknüpfen.

So kann etwa ein Vergleichsanweisung, die auf der Ursprungshardware zwei Werte miteinander vergleicht und das Ergebnis des Vergleichs durch Setzen des Bedingungscodes auf einen entsprechenden Wert ausgibt, mit Hilfe eines die elementare Vergleichsoperation ">" ("größer als") implementierenden und einen das Vergleichsergebnis charakterisierenden Ergebniswert liefernden Befehls auf der Zielhardware nachgebildet werden. Eine Verknüpfung mehrerer solcher Befehle wird erforderlich, wenn die ursprüngliche Vergleichsanweisung mehr als zwei verschiedene, durch den Bedingungscode repräsentierte Ergebnisse (z.B. "größer", "kleiner", "gleich") erzeugen kann.

Bei der Transformation wird noch zusätzlicher, im folgenden als "Zusatzcode" bezeichneter Code für die Zielhardware erzeugt, durch den zur Laufzeit das auf der Ursprungshardware dem Wert des Bedingungscodes nach Ausführung der Anweisung entsprechende Bitmuster ermittelt wird. Dies geschieht, indem ein vorgegebenes Ausgangsbitmuster einer unter Zuhilfenahme wenigstens eines Verschiebebefehls implementierten Bitoperation unterzogen wird, deren Wirkung von dem wenigstens einen im Zusammenhang mit der Anweisung generierten Ergebniswert abhängt.

Der Vorteil dieses Verfahrens ergibt sich dadurch, daß bei seiner Umsetzung in maschinenlesbaren Programmcode auf der Zielhardware, anders als etwa bei einer durch Einzelabfragen gesteuerten Verzweigungskaskade ("if-Kaskade") keine Sprungbefehle benötigt werden:
Die einzelnen Ergebniswerte der Befehle zur Nachbildung einer Anweisung werden unabhängig voneinander bestimmt und bei der Bitoperation auf dem Ausgangsmuster auf festgelegte Weise zur Bestimmung des Bitmusters herangezogen. Verzweigungen des Programmflusses (und damit Sprünge) sind dabei also nicht erforderlich.

Vorteilhafte Aus- und Weiterbildungen der Erfindung sind Gegenstand der Unteransprüche.

Nach einer ersten Ausgestaltung der Erfindung erfolgt bei der Portierung die Erzeugung des zusätzlichen Codes zur Ermittlung des dem Wert des Bedingungscodes entsprechenden Bitmusters für eine Anweisung nur dann, wenn die Möglichkeit besteht, daß eine im Programmfluß vor der möglichen Beeinflussung des Bedingungscodes durch darauffolgende Anweisungen stattfindende Auswertung dieses Bitmusters erfolgt. Steht dagegen fest, daß unabhängig von einem speziellen Programmlauf der bei der Ausführung der betroffenen Anweisung auf der Ursprungshardware generierte Bedingungscode in jedem Fall überschrieben würde, bevor er im weiteren Programmablauf genutzt werden könnte, so unterbleibt bei der Portierung die Erzeugung des Zusatzcodes für diese Anweisung. Damit können unnötiger Programmcode und daraus resultierend Laufzeit eingespart werden, ohne daß daraus Nachteile entstehen.

Eine weitere Ausgestaltung des erfindungsgemäßen Verfahrens betrifft eine spezielle Darstellung des nachgebildeten Bedingungscodes auf der Zielhardware. Dabei wird jedem Wert i des ursprünglichen Bedingungscodes auf der Zielhardware ein Bitmuster zugeordnet, bei dem nur eine dem Wert i eindeutig zugeordnete Bitposition auf "1" und alle anderen Bits des Bitmusters auf "0" gesetzt sind. Diese spezielle Zuordnung von Bitmustern ist vor allem dann von Vorteil, wenn diese Bitmuster den Sprungmasken der Anweisungen zur Programmverzweigung auf der Ursprungshardware entsprechen (z.B. bei IBM/390-Systemen). Damit ist dann eine sehr performante Abfrage des nachgebildeten Bedingungscodes durch darauffolgende, bei der Portierung aus dem Ursprungscode hervorgegangene Verzweigungsbefehle möglich.

Bei einer speziellen Variante dieser Ausbildung ist das Ausgangsbitmuster für die Bitoperation einem vorgegebenen Wert des Bedingungscodes zugeordnet, und die Bitoperation besteht darin, daß in Abhängigkeit von dem wenigstens einen zur Laufzeit im Zusammenhang mit der Nachbildung einer Anweisung auftretenden Ergebniswert das Ausgangsbitmuster um eine vorgegebene Anzahl von Bitpositionen verschoben wird. Dabei können auch in Abhängigkeit des wenigstens einen Ergebniswertes auch unterschiedliche Verschieberichtungen auftreten.

Nachfolgend werden Einzelheiten der Erfindung anhand von Ausführungsbeispielen unter Bezugnahme auf die Zeichnung näher erläutert.

Es zeigt
- FIG 1: schematisch das Grundprinzip des erfindungsgemäßen Verfahrens zur Nachbildung eines Bedingungscodes;
- FIG 2: die Wertzuweisung für den Bedingungscode bei einem Vergleichsbefehl;
- FIG 3: die Struktur einer Verzweigungskaskade bei bisherigen Lösungen;
- FIG 4: ein konkretes Beispiel für die Nachbildung einer Anweisung für eine Ursprungshardware auf einer Zielhardware.

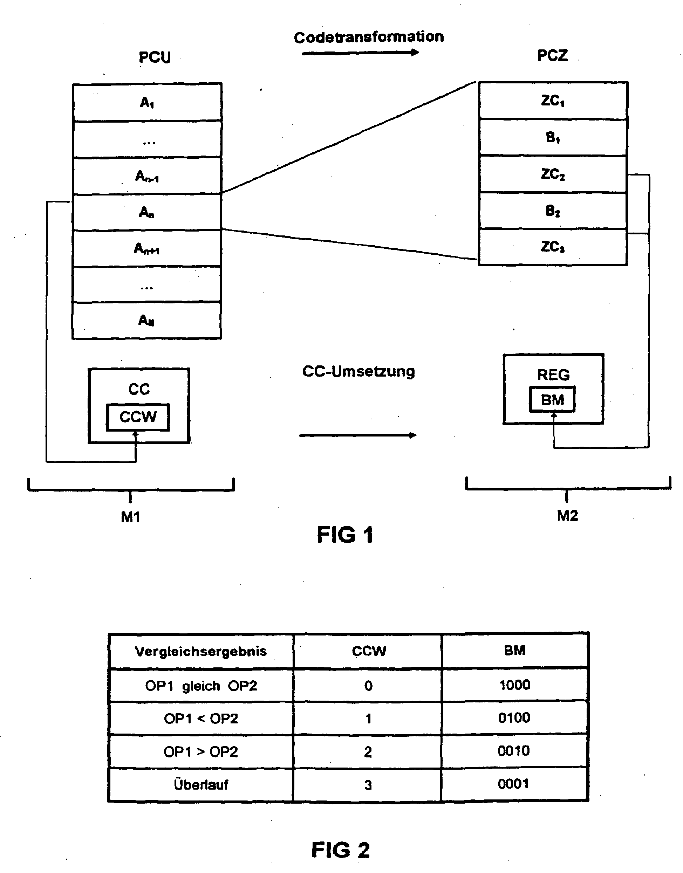

Das Grundprinzip des erfindungsgemäßen Verfahrens zur Nachbildung eines Bedingungscodes ist schematisch in FIG 1 dargestellt. Ein von einer Ursprungshardware M1 auf eine Zielhardware M2 zu portierender Programmcode PCU ist aus einzelnen Anweisungen A₁, A₂,...,A_{N} aufgebaut. Unter diesen Anweisungen ist zumindest eine, z.B. Aₙ, die den Wert CCW des in der Maschinenarchitektur der Ursprungshardware M1 vorgesehenen Bedingungscodes CC beeinflußt. Bei Rechnern, bei denen ein Bedingungscode verwendet wird, ist dies in der Praxis fast immer der Fall, da die meisten der Rechnerbefehle Einfluß auf den Wert CCW des Bedingungscodes CC nehmen und die häufig benötigten bedingten Verzweigungen zumindest zum großen Teil auf der Auswertung des Bedingungscodes CC beruhen.

Bei einer Codetransformation, mit der der zu portierende Programmcode PCU in Programmcode PCZ für eine Zielhardware M2 umgewandelt wird, wird jede der Anweisungen A₁, A₂,...,A_{N} in einen Befehl (oder eine semantisch äquivalente Befehlsfolge) im Programmcode PCZ umgesetzt. Für potentiell den Wert CCW des Bedingungscodes CC beeinflussende Anweisungen wird zusätzlicher Programmcode (Zusatzcode) für die Nachbildung des Bedingungscodes CC auf der Zielhardware M2 generiert. Bei dem in FIG 1 dargestellten Beispiel wird auf diese Weise die Anweisung Aₙ im Programmcode PCU in eine Befehlsfolge im Programmcode PCZ umgesetzt. Diese Befehlsfolge besteht aus zwei zur semantischen Darstellung der Anweisung Aₙ benötigten Befehlen B₁ und B₂ und einem aus drei Teilabschnitten ZC₁, ZC₂ und ZC₃ bestehenden Zusatzcode.
In der Maschinenarchitektur der Ursprungshardware M1 ist der Bedingungscode CC in der Regel als spezielle Hardware-Anzeige implementiert. Auf der Zielhardware muß der Bedingungscode nachgebildet werden. Neben der oben genannten Generierung von Zusatzcode bei der Codetransformation ist dabei auch ein Speicherbereich vorzusehen - aus Performancegründen ist ein Prozessorregister REG vorteilhaft -, in dem der jeweils aktuelle Wert des durch den Zusatzcode nachgebildeten Bedingungscodes in Form eines zugeordneten Bitmusters BM gespeichert ist.

Die Figuren FIG 2, FIG 3 und FIG 4 beziehen sich auf ein konkretes Ausführungsbeispiel, bei dem ein IBM/390-Rechnersystem als Ursprungshardware M1 gewählt ist und ein vorzeichenbehafteter ("signed") Zahlenwert a mit Null verglichen werden soll.

Auf dieser Ursprungshardware stehen für derartige Vergleiche verschiedene Vergleichsanweisungen zur Verfügung, die einen ersten Zahlenwert OP1 mit einem zweiten Zahlenwert OP2 vergleichen und - wie in FIG 2, Spalten eins und zwei dargestellt - in Abhängigkeit vom Ergebnis dieses Vergleichs den Wert CCW des Bedingungscodes CC setzen. Einer Ausgestaltung der Erfindung folgend, werden den so spezifizierten Werten CCW bei der Nachbildung des Bedingungscodes auf einer Zielhardware (z.B. einer Mips R4400-RISC-Maschine) jeweils Bitmuster BM eindeutig zugeordnet - FIG 2 dritte Spalte - bei denen eine Bitposition auf "1" und alle anderen Bitpositionen auf "0" gesetzt sind. Im Beispiel sind das die Bitmuster "1000" bei Gleichheit beider Zahlenwerte OP1 und OP2, "0100" für den Fall OP1<OP2 und "0010" für den Fall OP1>OP2. Zusätzlich ist der Wert CCW = 3 für den Bedingungscode CC bzw. das zugeordnete Bitmuster "0001" definiert, um einen numerischen Überlauf anzuzeigen. Bei Vergleichsoperationen, bei denen beide Operanden (Zahlenwerte) wohldefiniert sind, spielt ein Überlauf jedoch keine Rolle, so daß im folgenden nicht mehr näher darauf eingegangen wird.

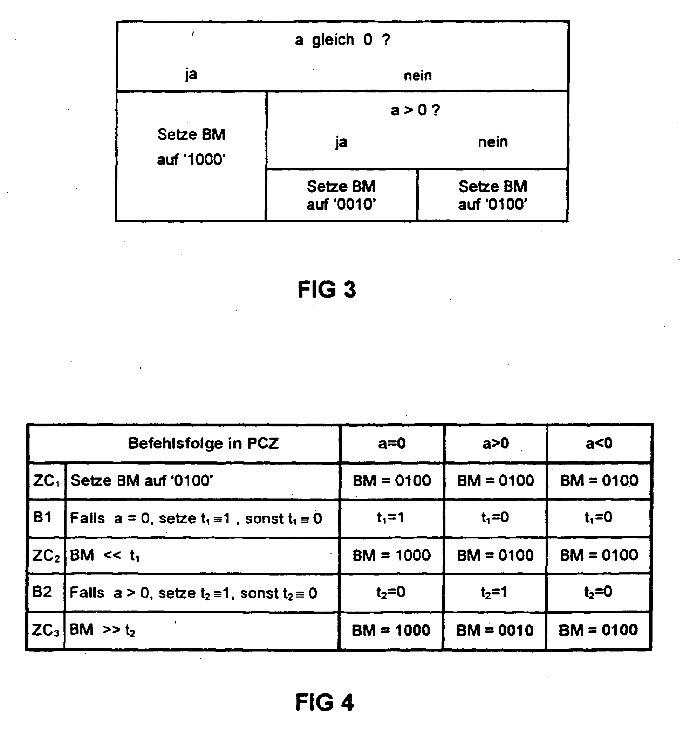

In FIG 3 ist zunächst eine für den Fachmann naheliegende Methode zur Generierung der dem Bedingungscode zugeordneten Bitmuster dargestellt. In einer Verzweigungskaskade wird der Vergleich des als ersten Operanden OP1 gewählten Zahlenwertes a mit dem als zweiten Operanden OP2 gewählten Zahlenwert "0" in zwei Einzelabfragen unterteilt. Die erste Einzelabfrage überprüft die Gleichheit beider Operanden und setzt das Bitmuster BM auf den in FIG 2 festgelegten Wert "1000", falls die Gleichheit erfüllt ist. Andernfalls folgt die zweite Einzelabfrage, die überprüft, ob der Zahlenwert a größer als der zweite Zahlenwert "0" ist. Entsprechend dem Vergleichsergebnis wird dann das Bitmuster BM gesetzt. Bei der Umsetzung der Verzweigungskaskade in Programmcode tritt ein Sprungbefehl auf, mit dem im Falle OP1≠OP2 (a≠0) die zweite Einzelabfrage angesprungen wird. Bei dieser Methode führt jedoch der bei vielen Rechnern relativ zu anderen Maschinenbefehlen "zeitintensive", d.h. eine hohe Anzahl von Prozessor-Taktzyklen benötigende Sprungbefehl zu nennenswerten Geschwindigkeitseinbußen.

Demgegenüber kommt das erfindungsgemäße Verfahren zur Nachbildung eines Bedingungscodes bei einer Codetransformation ohne Sprünge aus. In FIG 4 ist für das oben genannte Beispiel einer Vergleichsanweisung die im Programmcode PCZ für die Zielhardware M2 erzeugte und aus den Teilabschnitten ZC₁, ZC₂, ZC₃ des Zusatzcodes und den Befehlen B₁ und B₂ bestehende Befehlsfolge dargestellt. Die drei letzten Spalten der in FIG 4 gezeigten Tabelle geben in jeder Zeile jeweils für die Fälle a=0, a>0 und a<0 den nach Ausführung des in der Zeile auftretenden Befehls aktuellen Wert des Bitmusters BM bzw. den Inhalt von zwei Registervariablen t₁ und t₂ an.

Als erster Schritt wird im Teilabschnitt ZC₁ ein Ausgangsbitmuster definiert, das dem Fall OP1<OP2, (a<0) entspricht und damit einem zulässigen Wert (CCW=1) des Bedingungscodes CC zugeordnet ist.

Der Befehl B1 stellt einen ersten zur Nachbildung der im Programmcode PCU auftretenden Vergleichsanweisung benötigten Befehle dar und dient der Überprüfung der Gleichheit beider Operanden (OP1=a, OP2=0). Das Ergebnis dieser ersten Einzelabfrage wird als Ergebniswert "1" (für Gleichheit) bzw. "0" (für Ungleichheit) in der Registervariable t₁ abgelegt. Im folgenden Schritt, Teilabschnitt ZC₂, erfolgt ein erster Teil einer zweiteiligen, auf das (Ausgangs-)Bitmuster BM wirkenden Bitoperation. Der Bitoperator ist im Beispiel der Verschiebeoperator "<<", der ein Verschieben des Bitmusters BM um die in einer Registervariable t₁ gespeicherte Anzahl von Bitpositionen (0 oder 1) in eine erste Richtung (nach links) bewirkt.
Der sich anschließende Befehl B2 stellt den zweiten zur Nachbildung der im Programmcode PCU auftretenden Vergleichsanweisung benötigten Befehle dar. Er prüft, ob der erste Operand (OP1=a) größer ist, als der zweite (OP2=0). Das Ergebnis dieser zweiten Einzelabfrage wird als Ergebniswert "1" (für a>0) bzw. "0" (für a<0) in der Registervariable t₂ abgelegt. In abschließenden Schritt, Teilabschnitt ZC₃, erfolgt der zweite Teil der zweiteiligen Bitoperation. Sie wirkt auf das bereits dem ersten Teil der Bitoperation unterworfene Bitmuster BM. Der Bitoperator ist jetzt der zum ersten Bitoperator komplementäre Verschiebeoperator ">>", der ein Verschieben des Bitmusters BM um die in der Registervariable t₂ gespeicherte Anzahl von Bitpositionen (0 oder 1) in die zur ersten Verschieberichtung entgegengesetzte Richtung (also nach rechts) bewirkt. Das sich bei diesem Schritt ergebende Bitmuster BM ist dem nach Ausführung der ursprünglichen Vergleichsanweisung auf der Ursprungshardware M1 auftretenden Wert CCW des Bedingungscodes CC eindeutig zugeordnet und kann von darauffolgenden Anweisungen im Programmcode PCZ anstelle des ursprünglichen Bedingungscodes CC der Ursprungshardware M1 ausgewertet werden.

## Patentansprüche

1. Verfahren zur Nachbildung eines beim Ablauf von hardwarespezifischem Programmcode (PCU) für eine Ursprungshardware (M1) genutzten Bedingungscodes (CC) in dem nach Transformation erhaltenen Programmcode (PCZ) für eine abweichende Zielhardware (M2) mit einer ohne Bedingungscode (CC) arbeitenden Maschinenarchitektur,
wobei
- auf der Zielhardware (M2) ein den jeweils aktuellen Wert (CCW) des nachgebildeten Bedingungscodes (CC) in Form eines zugeordneten Bitmusters (BM) aufnehmender Speicherbereich (REG) vorgesehen wird, und
- jede im Programmcode (PCU) der Ursprungshardware (M1) den Wert (CCW) des Bedingungscodes (CC) beeinflussende Anweisung (Aₙ) im Programmcode (PCZ) für die Zielhardware (M2) nachgebildet wird,
**dadurch gekennzeichnet, daß**
die Nachbildung mit Hilfe wenigstens eines beim Programmablauf einen Ergebniswert generierenden Vergleichsbefehls (B1, B2) erfolgt, wobei
zusätzlich Code (ZC₁, ZC₂, ZC₃) erzeugt wird, durch den zur Laufzeit das auf der Ursprungshardware (M1) dem Wert (CCW) des Bedingungscodes (CC) nach Ausführung der Anweisung (Aₙ) entsprechende Bitmuster (BM) ermittelt wird, indem ein definiertes Ausgangsbitmuster einer unter Zuhilfenahme wenigstens eines Verschiebebefehls implementierten Bitoperation unterzogen wird, deren Wirkung von dem wenigstens einen im Zusammenhang mit der Anweisung generierten Ergebniswert abhängt.

2. Verfahren nach Anspruch 1,
**dadurch gekennzeichnet,**
**daß** bei der Transformation die Erzeugung des zusätzlichen Codes (ZC₁, ZC₂, ZC₃) zur Ermittlung des dem Wert (CCW) des Bedingungscodes (CC) nach Ausführung einer Anweisung (Aₙ) entsprechenden Bitmusters (BM) nur dann erfolgt, wenn eine im Programmfluß vor der möglichen Beeinflussung des Bedingungscodes (CC) durch darauffolgende Anweisungen stattfindende Auswertung dieses Bitmusters (BM) nicht ausgeschlossen ist.

3. Verfahren nach einem der vorhergehenden Ansprüche,
**dadurch gekennzeichnet,**
**daß** einem aktuellen Wert (CCW) des ursprünglichen Bedingungscodes auf der Zielhardware ein Bitmuster (BM)zugeordnet wird, bei dem nur eine dem Wert (CCW) eindeutig zugeordnete Bitposition auf "1" und alle anderen Bits des Bitmusters (BM) auf "0" gesetzt werden.

4. Verfahren nach Anspruch 3,
**dadurch gekennzeichnet,**
**daß** das Ausgangsbitmuster für die Bitoperation einem vorgegebenen Wert (CCW) des Bedingungscodes (CC) zugeordnet ist, und die Bitoperation darin besteht, daß in Abhängigkeit von dem wenigstens einen zur Laufzeit im Zusammenhang mit der Nachbildung einer Anweisung (Aₙ) auftretenden Ergebniswert das Ausgangsbitmuster um eine vorgegebene Anzahl von Bitpositionen verschoben wird.

## Claims

1. Method for simulating a condition code (CC), used for the execution of hardware-specific program code (PCU) for a piece of source hardware (M1), in the program code (PCZ), obtained following transformation, for a differing piece of destination hardware (M2) with a machine architecture which operates without a condition code (CC),
where
- a memory area (REG) holding the respective current value (CCW) of the simulated condition code (CC) in the form of an associated bit pattern (BM) is provided on the destination hardware (M2), and
- each instruction (Aₙ) influencing the value (CCW) of the condition code (CC) in the program code (PCU) for the source hardware (M1) is simulated in the program code (PCZ) for the destination hardware (M2),
**characterized in that**
the simulation is effected using at least one comparison command (B1, B2) which generates a result value during the program execution, and additionally code (ZC₁, ZC₂, ZC₃) is produced which ascertains at runtime the bit pattern (BM) corresponding to the value (CCW) of the condition code (CC) on the source hardware (M1) following execution of the instruction (Aₙ) by virtue of a defined initial bit pattern being subjected to a bit operation which is implemented using at least one shift command and whose effect is dependent on the at least one result value generated in connection with the instruction.

2. Method according to the preceding claim,
**characterized**
**in that** during the transformation the additional code (ZC₁, ZC₂, ZC₃) is produced for the purpose of ascertaining the bit pattern (BM) corresponding to the value (CCW) of the condition code (CC) following execution of an instruction (Aₙ) only if there is no exclusion to evaluation of this bit pattern (BM) taking place in the program flow prior to the possible influencing of the condition code (CC) by subsequent instructions.

3. Method according to one of the preceding claims,
**characterized**
**in that** a current value (CCW) of the original condition code is allocated, on the destination hardware, a bit pattern (BM) for which only a bit position clearly associated with the value (CCW) is set to "1" and all other bits of the bit pattern (BM) are set to "0".

4. Method according to Claim 3,
**characterized**
**in that** the initial bit pattern for the bit operation is associated with a prescribed value (CCW) of the condition code (CC), and the bit operation involves the initial bit pattern being shifted by a prescribed number of bit positions on the basis of the at least one result value which appears at runtime in connection with the simulation of an instruction (Aₙ).

## Revendications

1. Procédé de simulation d'un code conditionnel (CC) utilisé pour un matériel d'origine (M1) lors de l'exécution d'un code de programme (PCU) spécifique à un matériel dans le code de programme (PCZ) obtenu après transformation pour un matériel destinataire (M2) écartant avec une architecture de machine fonctionnant sans code conditionnel (CC),
- la zone de mémoire (REG) enregistrant la valeur (CCW) à chaque fois actuelle du code conditionnel (CC) simulé sous la forme d'un modèle binaire (BM) associé étant prévue sur le matériel destinataire (M2) et
- chaque instruction (Aₙ) qui influence la valeur (CCW) du code conditionnel (CC) dans le code de programme (PCU) du matériel d'origine (M1) étant simulée dans le code de programme (PCZ) pour le matériel destinataire (M2),
**caractérisé en ce que**
la simulation est réalisée à l'aide d'au moins une instruction de comparaison (B1, B2) qui génère une valeur de résultat lors de l'exécution du programme,
un code supplémentaire (ZC₁, ZC₂, ZC₃) étant généré, par le biais duquel est déterminé le modèle binaire (BM) correspondant à la valeur (CCW) du code conditionnel (CC) après l'exécution de l'instruction (Aₙ) au moment de l'exécution sur le matériel d'origine (M1) en soumettant un modèle binaire d'origine défini à une opération binaire mise en oeuvre à l'aide d'au moins une instruction de décalage et dont l'effet dépend de l'au moins une valeur de résultat générée en relation avec l'instruction.

2. Procédé selon la revendication précédente, **caractérisé en ce que** lors de la transformation, la génération du code supplémentaire (ZC₁, ZC₂, ZC₃) en vue de déterminer le modèle binaire (BM) correspondant à la valeur (CCW) du code conditionnel (CC) après l'exécution de l'instruction (Aₙ) n'est effectuée que si une interprétation de ce modèle binaire (BM) dans le flux du programme avant l'influence possible du code conditionnel (CC) par les instructions qui suivent n'est pas exclue.

3. Procédé selon l'une des revendications précédentes, **caractérisé en ce qu'**un modèle binaire (BM) est associé sur le matériel destinataire à une valeur actuelle (CCW) du code conditionnel original, avec lequel une seule position binaire explicitement associée à la valeur (CCW) est mise à « 1 » et tous les autres bits du modèle binaire (BM) sont mis à « 0 ».

4. Procédé selon la revendication 3, **caractérisé en ce que** le modèle binaire d'origine est associé à une valeur prédéfinie (CCW) du code conditionnel (CC) pour l'opération binaire et l'opération binaire consiste à décaler le modèle binaire d'origine d'un nombre donné de positions binaires en fonction de l'au moins une valeur de résultat produite au moment de l'exécution en relation avec la simulation d'une instruction (Aₙ).
